# EUROPEAN PATENT SPECIFICATION

(11) **EP 1 932 105 B1**
(45) Date of publication and mention of the grant of the patent: **11.02.2009**
(21) Application number: 06794579.0
(22) Date of filing: 26.09.2006
(51) Int. Cl.: G06K 19/077, G08B 13/24, G06K 19/04

(54) **SECURITY AND IDENTIFICATION TAGS**
SICHERHEITS- UND IDENTIFIKATIONSETIKETTEN
SÉCURITÉ ET ÉTIQUETTES D'IDENTIFICATION

(30) Priority: 27.09.2005 GB 0519603
(43) Date of publication of application: 18.06.2008
(73) Proprietor: Tag Company (UK) Limited, West Drayton, Middlesex UB7 0BT (GB)
(72) Inventor: CONNELL, Suzanne, Rebecca, Middlesex UB7 7RH (GB); KROM, Mark, Daniel, Fort Lauderdale Florida 33304 (US); MARCHESE, Jonathan, Peter, London W14 8RZ (GB)
(74) Representative: Hyden, Martin Douglas
(86) International application number: PCT/GB2006/003580
(87) International publication number: WO 2007/036707

(56) References cited:
- EP-A- 1 302 893
- JP-A- 2001 101 535
- US-A- 5 081 446
- US-A- 5 841 350

## Description

### Technical field

This invention relates to security tags that can be applied to articles for theft prevention, inventory tracking, etc. Such tags includes radio-frequency and magnetic EAS (electronic article surveillance) tags, radio-frequency identification (RFID) tags, and the like. In particular, the invention relates to such tags that are suitable for use on items such as cases for compact discs (CDs), digital versatile discs (DVDs), Video Games, and the like. The term 'security tag' is used here for both EAS and RFID tags.

### Background art

EAS tags are well-known as anti-theft devices. Radio-frequency EAS tags essentially comprise an LC tank circuit with a resonance peak at a predetermined frequency. Detection is achieved by sweeping an rf field around the predetermined frequency and detecting a dip due to the presence of the tag. The tags are deactivated by submitting them to a strong FM field to induce voltages exceeding the capacitor's breakdown voltage.

One common use for EAS tags is in securing and tracking books, CDs, DVDs and the like in retail outlets. Such tags are usually laid down on a thin flexible substrate that is inserted into a book or product package, or adhered to the outside of packaging or wrapping. A typical form of tag is a square or rectangular antenna with the electronic components located within the loop.

RFID tags have been known for some time and are routinely found in a number of uses for tracking and identification of items. An RFID tag typically comprises a loop antenna and a small electronic circuit including an integrated circuit chip having a unique code programmed into it. Passive RFID tags have no internal power source (battery). In use, an interrogating radio-frequency (RF) signal induces a current in the loop antenna which provides both power and data to the chip. The chip in turn provides an output signal to the antenna which is detected by the interrogating system. Active RFID tags include a small internal power source allowing them to communicate over greater ranges and store and process larger amounts of information in the chip.

One problem encountered with such devices when used on cases for CDs, DVDs, and Video Games is that the metallization layer on the disc interferes with the RF signals, reducing the power and range available. This problem is particularly evident at certain frequencies when the loop antenna overlies part of the disc. This problem conflicts with the desire to make the loop as large as possible to obtain a good signal.

According to US 5,081,466 this problem is solved by placing a tag with a specially formed antenna loop near one edge of a compact disc case such that the antenna and the compact disc do not overlap.

Another problem encountered with packaging such as CD or DVD cases is that it is possible to open the package and remove the disc, making them vulnerable to theft. GB 2311053 A describes a security tag having an adhesive layer which can be wrapped around the opening edge of the package so as to both secure the security tag to the package and prevent opening of the package to remove the disc.

This invention is based on the recognition that the form of the tag can be configured to diminish the effect of the disc on signals and that the tag can be provided in a convenient form for use with packaging such as CD, DVD, or Game cases.

### Disclosure of the invention

One aspect of the invention provides a tag comprising a loop antenna having a substantially triangular shape and an electronic component connected to and positioned within the loop antenna, the antenna and component comprising a flexible metal structure disposed on one face of a flexible substrate, the flexible substrate extending away from one side of the triangular loop antenna to form a flap such that, when the tag is positioned on a face of a package close to its edge, the flap can be wrapped around the edge of the package and onto its other face.

By providing the loop antenna with a substantially triangular shape, it is possible to position the tag on CD or DVD packaging (which is typically square or rectangular) in a corner region so as to have little or no overlap with the metallised surface of the disc and so avoid interference while still obtaining a relatively large loop for good signal reception.

The flexible substrate can be provided with an adhesive on the opposite face to that on which the tag is disposed so as to allow fixing on a package.

It is also preferred that the substrate is transparent and may also be provided with printing that can be viewed when the tag is fixed to packaging.

The adhesive is preferably a clear, semi-transparent, removable acrylic-based adhesive.

In one particularly preferred embodiment, several tags are provided on a backing strip from which they can be removed and placed onto packaging. In one format, the tags can be arranged in sequential order with the triangular loop antennae consistently on one side of the substrate. This format is preferable for use with automated application. In another format, the tags can be arranged in an alternating configuration on the strip to optimise use of space.

### Brief description of the drawings

Figure 1 shows a security tag according to one embodiment of the invention;
Figure 2 shows a strip of security tags of the type shown in Figure 1; and
Figure 3 shows an security tag of the type shown in Figure 1 when used on a CD case.

### Mode(s) for carrying out the invention

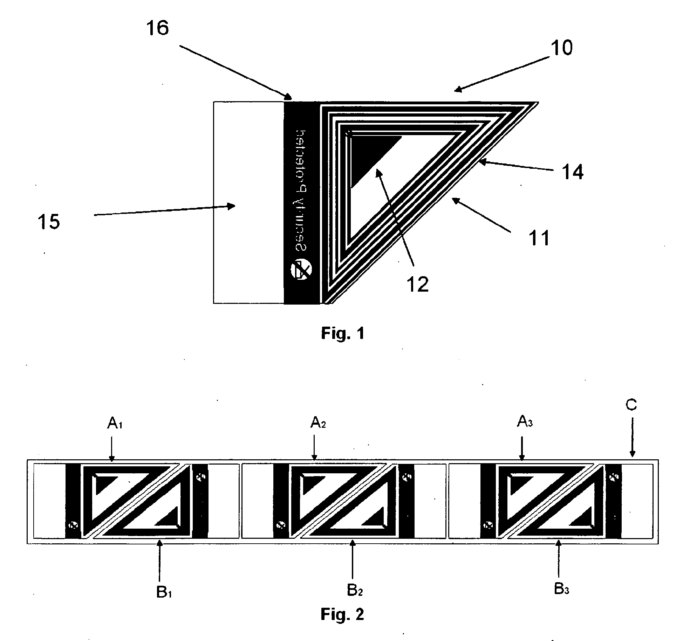

Figure 1 shows one embodiment of an EAS tag according to the invention. The active part 10 of the tag 18 comprises a loop antenna 11 in the form of a triangle, and an electronic component 12 connected to the antenna 11 and located within the loop. The active part 10 is formed from thin, flexible metallic structures, typically aluminium, disposed on one face of a flexible substrate 14. The manner of forming such flexible structures on substrates is well-known for use in identification tag devices. The flexible substrate 14 is a clear plastic material. In the region of the active part 10, the substrate 14 has a corresponding, but slightly larger, triangular shape. The part of the substrate 14 along one of the sides of the antenna 11 is extended to form a flap 15. A printed section 16 is provided on the substrate adjacent the same side of the antenna 11. This printed section 16 can carry security markings, branding or any other information.

The face of the substrate 14 opposite to that on which the tag and printed section are provided is coated with an adhesive to allow fixture to a package such as a CD or DVD case. The adhesive is preferably a clear, semi-permanent, removable, acrylic-based adhesive. Adhesives with good clarity and UV resistance are preferred. Such adhesives are known for applications such as these.

The intended use of the tag of Figure 1 is on a CD or Game case (discussed in more detail below). Consequently, the dimensions of the active part 10, in particular those of the antenna 11 are selected such that, when placed on the case in a corner, little or none of the antenna overlies the disc. DVD and Game cases are often of different size and shape to CD cases so the dimensions for that application can be different. Also, the printed section 16 can be dimensioned so as to lie along the edge of the case when the flap 15 is wrapped around the case.

The particular operating characteristics of the identification tag device will depend upon the particular system being used. A number of standard systems are currently in use operating. EAS tags can be magnetic, magneto-acoustic, radio-frequency and microwave systems. RFID tags operate at various frequencies from low frequency tags operating at just over 100 kHz to microwave tags operating at just over 2 GHz. High frequency (13.56 MHz) systems are particularly preferred for uses in the present invention.

Figure 2 shows one embodiment of a strip of tags that is considered as particularly convenient for use. A number of tags A₁₋₃, B₁₋₃ are located releasably on a strip C. Because of the triangular shape of the antenna 11 and the underlying part of the substrate, alternate tags A, B are rotated by 180° such that the antennae lie alongside each other. This optimises the use of the strip C and keeps the overall length down. The strip C is coated in the usual manner to allow easy release of the tags A, B with the adhesive layer intact.

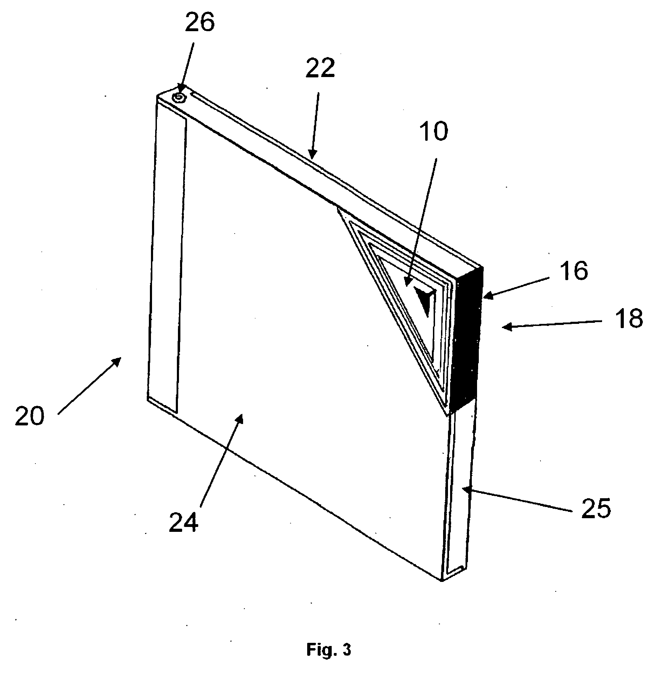

Figure 3 shows a perspective view of the use of a tag 18 of the type shown in Figure 1 on a conventional CD case 20. The case 20 has a base 22 to which a lid 24 is connected by way of a hinge 26.

In the embodiment shown in Figure 3 the CD case 20 is secured in its closed position by way of the tag 18. The tag 18 is secured to the case such that the active portion 10 is on the lid 24 and the flap 15 is wrapped around the edge 25 and onto the base 22, the adhesive on the substrate 14 fixing the tag 18 to both the lid 24 and the base 22 such that the tag 18 has to be removed is before the lid 24 can be opened. The active part 10 is positioned in the corner of the lid 24 so that it does not overlie the disc in the case and so avoids the interfering effect of the metallised layer. The printed portion 16 lies along the edge 25.

The triangular shape is relatively easy to manufacture and achieve the objective of not overlying the disc. However, the shape does not have to be a perfect triangle. Thus, the side closest to the disc can be curved to optimise the amount of space taken up by the antenna.

A system for using tags such as those described above will include a transmitter and central processing system and will be installed in the location of use, such as a store.

Changes can be made while remaining within the scope of the invention. For example, as is discussed above, the dimensions of the active part 10 can be selected according to the packaging to be secured.

## Claims

1. An identification tag (18) comprising a loop antenna (11) having a substantially triangular shape and an electronic component (12) connected to and positioned within the loop antenna (11), the antenna and component comprising a flexible metal structure disposed on one face of a flexible substrate (14), the flexible substrate extending away from one side of the triangular loop antenna (11) to form a flap (15) such that, when the tag (18) is positioned on a face of a package (20) close to its edge, the flap (15) can be wrapped around the edge (25) of the package and onto its other face (22).

2. An identification tag as claimed in claim 1, wherein the flexible substrate has a similar triangular shape in the region of the loop antenna.

3. An identification tag as claimed in claim 2, wherein the substrate is transparent.

4. An identification tag as claimed in claim 2 or 3, wherein the substrate is provided with an adhesive on the opposite face to that on which the tag is disposed so as to allow fixing on a package.

5. An identification tag as claimed in claim 4, wherein the adhesive is a clear, semi-transparent, removable acrylic-based adhesive.

6. An identification tag as claimed in any of claims 2-5, wherein the substrate provided with printing that can be viewed when the tag is fixed to packaging.

7. An identification tag as claimed in any preceding claim, comprising an EAS tag.

8. An identification tag as claimed in any preceding claim, comprising an RFID tag.

9. A strip of identification tags, comprising a plurality of tags as claimed in any preceding claim, positioned on a backing strip from which they can be removed and placed onto packaging, the tags being arranged in pairs in an alternating configuration on the strip such that the triangular antennae of the tags in a pair lie alongside each other.

## Patentansprüche

1. Identifikationsetikett (18) mit einer Schleifenantenne (11) mit im wesentlichen dreieckiger Form und einer mit der Schleifenantenne (11) verbundenen und in dieser positionierten Elektronikkomponente (12), wobei die Antenne und die Komponente eine auf einer Oberseite eines flexiblen Substrats (14) angeordnete flexible Metallstruktur umfassen, wobei sich das flexible Substrat (14) von einer Seite der dreieckigen Schleifenantenne (11) weg erstreckt, um eine Lasche (15) dergestalt zu bilden, daß, wenn das Etikett (18) auf einer Oberseite einer Verpackung (20) in der Nähe ihrer Kante positioniert wird, die Lasche (15) um die Kante (25) der Verpackung herum und auf ihre andere Oberseite (22) gefaltet werden kann.

2. Identifikationsetikett nach Anspruch 1, wobei das flexible Substrat in der Region der Schleifenantenne eine ähnliche dreieckige Form aufweist.

3. Identifikationsetikett nach Anspruch 2, wobei das Substrat transparent ist.

4. Identifikationsetikett nach Anspruch 2 oder 3, wobei das Substrat auf der Oberseite, die der, auf der das Etikett angeordnet ist, gegenüberliegt, einen Klebstoff aufweist, um so eine Befestigung an einer Verpackung zu ermöglichen.

5. Identifikationsetikett nach Anspruch 4, wobei der Klebstoff ein klarer, halbtransparenter ablösbarer Klebstoff auf Acrylbasis ist.

6. Identifikationsetikett nach einem der Ansprüche 2-5, wobei das Substrat mit einem Aufdruck versehen ist, der sichtbar ist, wenn das Etikett an Verpackung befestigt ist.

7. Identifikationsetikett nach einem der vorhergehenden Ansprüche, umfassend ein EAS-Etikett.

8. Identifikationsetikett nach einem der vorhergehenden Ansprüche, umfassend ein RFID-Etikett.

9. Streifen von Identifikationsetiketten, der mehrere Etiketten nach einem der vorhergehenden Ansprüche umfaßt, die auf einem Trägerstreifen positioniert sind, von dem sie entfernt und auf Verpackung plaziert werden können, wobei die Etiketten in Paaren in einer alternierenden Konfiguration auf dem Streifen dergestalt angeordnet sind, daß die dreieckigen Antennen der Etiketten in einem Paar längsseits zueinander liegen.

## Revendications

1. Etiquette d'identification (18) comprenant une antenne cadre (11) ayant une forme essentiellement triangulaire et un composant électronique (12) connecté à l'antenne cadre (11) et positionné à l'intérieur de celle-ci et un composant comprenant une structure métallique souple disposée sur une face d'un substrat souple (14), le substrat souple s'étendant hors d'un côté de l'antenne cadre triangulaire (11) afin de former un rabat (15) de telle sorte que lorsque l'étiquette (18) est positionnée sur une face d'un paquet (20) près de son bord, le rabat (15) puisse être enveloppé autour du bord (25) du paquet et sur son autre face (22).

2. Etiquette d'identification selon la revendication 1, dans laquelle le substrat souple a une forme triangulaire similaire dans la région de l'antenne cadre.

3. Etiquette d'identification selon la revendication 2, dans laquelle le substrat est transparent.

4. Etiquette d'identification selon la revendication 2 ou 3, dans laquelle le substrat est doté d'un adhésif sur la face opposée à celle sur laquelle est disposée l'étiquette de façon à permettre sa fixation sur un paquet.

5. Etiquette d'identification selon la revendication 4, dans laquelle l'adhésif est un adhésif à base d'acrylique clair, semi-transparent, amovible.

6. Etiquette d'identification selon l'une quelconque des revendications 2 à 5, dans laquelle le substrat est doté d'un imprimé qui peut être vu quand l'étiquette est fixée sur un paquet.

7. Etiquette d'identification selon l'une quelconque des revendications précédentes, comprenant une étiquette EAS.

8. Etiquette d'identification selon l'une quelconque des revendications précédentes, comprenant une étiquette RFID.

9. Bande d'étiquettes d'identification, comprenant une pluralité d'étiquettes selon l'une quelconque des revendications précédentes, positionnée sur une bande de support de laquelle elles peuvent être retirées et placées sur des paquets, les étiquettes étant disposées en paires dans une configuration alternée sur la bande de telle sorte que les antennes triangulaires des étiquettes dans une paire reposent l'une à côté de l'autre.
